# EUROPÄISCHE PATENTANMELDUNG

(11) **EP 4 793 238 A1**
(43) Veröffentlichungstag der Anmeldung: **19.08.2026**
(21) Anmeldenummer: 25158497.5
(22) Anmeldetag: 18.02.2025
(51) Int. Cl.: C01G 49/00, C01G 51/66, C01G 51/68, C01G 51/82, C01G 53/66, C01G 53/68, C25B 1/04, C25B 11/055, C25B 11/077

(54) **ELEKTRODENMATERIAL MITTELS ACETATPRECURSOR**

(71) Anmelder: Oberland Mangold GmbH, 82438 Eschenlohe (DE)
(72) Erfinder: GÜNTHER, Timon, 82438 Eschenlohe (DE); MANGOLD, Tobias, 82438 Eschenlohe (DE); WANG, Yuqing, 82438 Eschenlohe (DE)
(74) Vertreter: Weickmann & Weickmann PartmbB

(57) **Zusammenfassung**

Die vorliegende Erfindung betrifft Metalloxide, deren Herstellung aus Acetatsalzen und Verwendung als Elektrodenmaterial.

## Beschreibung

Die vorliegende Erfindung betrifft Metalloxide, deren Herstellung aus Acetatsalzen und Verwendung als Elektrodenmaterial.

Die katalytische Herstellung von Wasserstoff ist ein bedeutendes Verfahren in der chemischen Industrie, das vor allem aufgrund des steigenden Bedarfs an sauberer Energie und der Verringerung von Treibhausgasemissionen an Bedeutung gewonnen hat. Die wichtigsten Methoden zur katalytischen Wasserstoffproduktion sind Dampfreformierung von Erdgas, partielle Oxidation, autotherme Reformierung, Elektrolyse und photokatalytische Wasserspaltung. Bei der Elektrolyse von Wasser zu Wasserstoff wird momentan zwischen vier Haupttechnologien unterschieden: die Alkalielektrolyse (AEL), die Proton-Exchange-Membrane-Elektrolyse (PMEL), die Hochtemperaturelektrolyse (HTEL) und die Anion-Exchange-Membrane-Elektrolyse (AEMEL).

Die am häufigsten kommerziell eingesetzte Elektrolysetechnologie ist die AEL. Hierbei werden zwei metallische Elektroden in einer alkalisch-wässrigen elektrisch leitfähigen Lösung, das sogenannte Elektrolyt, eingetaucht. Durch Anlegen einer Gleichspannung setzt dann die elektrolytische Wasserspaltung ein und an der Kathode (negativ geladen) entstehen als Reaktionsprodukte Wasserstoff und Hydroxydionen.

Bei der alkalischen Elektrolyse handelt es sich um eine erprobte Technologie, deren Betriebskosten relativ niedrig sind. Es sind keine teuren Edelmetallkatalysatoren notwendig, da günstigere Metallkatalysatoren ausreichend sind. Andererseits ist der Wirkungsgrad im Vergleich zu den alternativen Elektrolyseverfahren etwas geringer. Derzeit ist die Alkalielektrolyse das Mittel der Wahl zur Herstellung von grünem Wasserstoff, in dem der benötigte Strom zur Elektrolyse aus erneuerbaren Energiequellen stammt.

Die katalytische Wirkung von spezifischen Metalloxid-Verbindungen im Elektrodenmaterial ist beispielsweise in der nichtveröffentlichten Anmeldung EP 24186170.7 beschrieben.

Es wurde überraschenderweise gefunden, dass mit den erfindungsgemäßen Verbindungen beschichtete Elektroden - bei geringem elektrischen Schichtwiderstand - nicht nur eine hohe elektrochemische Stabilität, sondern auch eine hohe mechanische Stabilität aufweisen. Ferner wurde gefunden, dass die erfindungsgemäßen Verbindungen über ein vorteilhaftes Sol-Gel-Verfahren *in situ* in einer sehr hohen Reinheit hergestellt werden können, ohne dass dabei toxische oder gesundheitsgefährdende Nebenprodukte entstehen, die aufwendig abgetrennt und prozessiert werden müssen.

Aufgabe der vorliegenden Erfindung ist es daher, Verbindungen bereitzustellen, die sich vorteilhaft in der Herstellung qualitativ hochwertiger Elektrodenmaterialien einsetzen und mit geringem Aufwand (leichte Aufarbeitung der Produkte, geringe Arbeitsschutzmaßnahmen) herstellen lassen.

In einem ersten Aspekt betrifft die Erfindung daher eine Verbindung der Formel ABO₃, AB₂O₄ oder A₂B₂O₆, wobei
A ausgewählt ist aus Barium (Ba), Strontium (Sr), Lanthan (La), Praseodym (Pr), und/oder Calcium (Ca), bevorzugt Lanthan (La), Barium (Ba) und/oder Strontium (Sr);
B ausgewählt ist aus Eisen (Fe), Cobalt (Co), Nickel (Ni), Mangan (Mn), Platin (Pt), Iridium (Ir), Ruthenium (Ru), Palladium (Pd) und/oder Kupfer (Cu), bevorzugt Eisen (Fe), Cobalt (Co) und/oder Nickel (Ni), und
die Verbindung in einem Pulverröntgendiffraktogramm (Cu-Kα-Strahlung) mindestens ein charakteristisches Signal 2θ±1° bei 24,4°, 32,7°, 33,0°, 32,7°, 39,7°, 41,2°, 46,1°, 47,2°, 57,9° und/oder 69,0°aufweist.

Bevorzugt besteht die Komponente A aus unterschiedlichen Metallionen, insbesondere zwei unterschiedlichen Metallionen. Stärker bevorzugt umfasst Komponente A eine Mischung aus Lanthan (La)- und Strontium (Sr)-Ionen oder eine Mischung aus Barium (Ba)- und Strontium (Sr)-Ionen. Noch stärker bevorzugt besteht Komponente A aus einer Mischung aus Lanthan (La)- und Strontium (Sr)-Ionen oder einer Mischung aus Barium (Ba)- und Strontium (Sr)-Ionen.

Im Falle einer La/Sr-Mischung umfasst Komponente A bevorzugt 40-70 mol-% Lanthan und 30-60 mol-% Strontium jeweils bezogen auf die Gesamtkomponente A. Stärker bevorzugt besteht Komponente A aus 40-70 mol-% Lanthan und 30-60 mol-% Strontium.

Im Falle einer Ba/Sr-Mischung umfasst diese bevorzugt 40-70 mol-% Barium und 30 - 60 mol-% Strontium jeweils bezogen auf die Gesamtkomponente A. Stärker bevorzugt besteht Komponente A aus 40-70 mol-% Barium und 30-60 mol-% Strontium.

Die Komponente B ist ausgewählt aus Eisen, Cobalt, Nickel, Mangan, Platin, Iridium, Ruthenium, Palladium und/oder Kupfer, bevorzugt Eisen, Cobalt und/oder Nickel. Bevorzugt besteht die Komponente B aus unterschiedlichen Metallionen, insbesondere zwei unterschiedlichen Metallionen. Stärker bevorzugt umfasst Komponente B eine Mischung aus Eisen- und Cobalt-Ionen oder Eisen- und Nickel-Ionen. Stärker bevorzugt besteht die Komponente B aus einer Mischung aus Eisen- und Cobalt-Ionen oder Eisen- und Nickel-Ionen.

Im Falle einer Fe/Co-Mischung umfasst die Komponente B bevorzugt 40 - 70 mol-% Eisen und 30 - 60 mol-% Cobalt, jeweils bezogen auf die Gesamtkomponente B. Stärker bevorzugt besteht Komponente B aus 40-70 mol-% Eisen und 30-60 mol-% Cobalt.

Im Falle einer Fe/Ni-Mischung umfasst die Komponente B bevorzugt 40 - 70 mol-% Eisen und 30 - 60 mol-% Nickel, jeweils bezogen auf die Gesamtkomponente B. Stärker bevorzugt besteht Komponente B aus 40-70 mol-% Eisen und 30-60 mol-% Nickel.

Die erfindungsgemäße Verbindung liegt bevorzugt in einer Perowskit- oder einer Spinellstruktur vor.

Besonders bevorzugt hat die erfindungsgemäße Verbindung die folgende Summenformel Ba_{0,5}Sr_{0,5}Co_{0,5}Fe_{0,5}O₃, La_{0,6}Sr_{0,4}CoO₃, La_{0,6}Sr_{0,4}FeO₃, La_{0,6}Sr_{0,4}NiO₃, La_{0,6}Sr_{0,4}Ni_{0,5}Fe_{0,5}O₃, La_{0,6}Sr_{0,4}Co_{0,5}Fe_{0,5}O₃, Ba_{0,6}Sr_{0,4}Ni_{0,5}Fe_{0,5}O₃, oder Ba_{0,6}Sr_{0,4}Co_{0,5}Fe_{0,5}O₃.

Die erfindungsgemäßen Verbindungen haben mindestens ein charakteristisches Signal im Pulverröntgendiffraktogramm (Cu-Kα Strahlung = 1,54 Å) 2θ±1°, bevorzugt 2θ±0,2° bei 24,4°, 32,7°, 33,0°, 32,7°, 39,7°, 41,2°, 46,1°, 47,2°, 57,9° und/oder 69,0°.

Bevorzugt hat La_{0,6}Sr_{0,4}Ni_{0,5}Fe_{0,5}O₃ in einem Pulverröntgendiffraktogramm (Cu-Kα Strahlung) die intensivsten Signale 2θ±1°, stärker bevorzugt 2θ±0,2°, bei 33,0°, 41,2°, 47,2°, 57,9° und 69,0°.

Bevorzugt hat La_{0,6}Sr_{0,4}Co_{0,5}Fe_{0,5}O₃ in einem Pulverröntgendiffraktogramm (Cu-Kα Strahlung) die intensivsten Signale 2θ±1°, stärker bevorzugt 2θ±0,2°, bei 24,4°, 32,7°, 39,7°, 46,1° und 57,9°.

Die erfindungsgemäße Verbindung hat bevorzugt einen elektrischen Schichtwiderstand von 0,05 - 2 Ω/cm² gemessen gemäß DIN EN ISO 16773-1 an beschichteten und unbeschichteten metallischen Proben.

In einem weiteren Aspekt ist die Erfindung auf ein Verfahren zur Herstellung der erfindungsgemäßen Verbindung gerichtet, umfassend die Schritte:
a) Mischen von mindestens einem Acetatsalz A'Ac und mindestens einem Acetatsalz B'Ac mit mindestens einem (organischen) Lösungsmittel, bevorzugt Essigsäure, Formamid, Wasser, Ethanol, Isopropanol, oder einer Mischung davon;
b) Zugeben mindestens eines Bindemittels, bevorzugt Polyvinylacetat, Polyvinylbutyral oder einer Mischung davon;
c) Homogenisieren der nach Schritt b) erhaltenen Mischung;
d) Thermisches Behandeln des nach Schritt c) erhaltenen Homogenisats bei Temperaturen bis zu 1000 °C;
e) Abkühlen der nach Schritt d) erhaltenen Verbindung auf Raumtemperatur (20°C).

Bevorzugt ist das molare Verhältnis von A'Ac zu B'Ac 0,5 - 1,5:0,5 - 3 im Schritt a).

A' ist bevorzugt ausgewählt aus der Gruppe bestehend aus Ba(II), Sr(II), La(III), Pr(III), und Ca(II), bevorzugt Ba(II), La(III) und Sr(II).

B' ist bevorzugt ausgewählt aus der Gruppe bestehend aus Fe(II, III), Co(II, III), Ni(II, III), Mn(II, III), Pt(II, III), Ir(II, III), Ru(II, III), Pd(II, III) und Cu (I, II), bevorzugt Fe(II, III), Co(II, III) und Ni (II, III).

Da das Acetatanion (CH₃COO⁻) einfach negativ geladen ist, ergibt sich für A'Ac und B'Ac mit einem ein-, zwei- oder dreiwertigen Metall(Me)-Kation die Summenformel Me^{I}(CH3COO), Me^{II}(CH3COO)₂ oder Me^{III}(CH3COO)₃. Die Acetatsalze umfassen auch deren Hydrate, Solvate und Polymorphe.

Bevorzugt ist A'Ac ausgewählt aus der Gruppe bestehend aus La(CH₃COO)₃ oder einem Hydrat davon, Sr(CH₃COO)₂ oder einem Hydrat davon, Ba(CH₃COO)₂ oder einem Hydrat davon und/oder Ca(CH₃COO)₂ oder einem Hydrat davon.

Bevorzugt ist B'Ac ausgewählt aus der Gruppe bestehend aus Co(CH₃COO)₂ oder einem Hydrat davon, Fe(CH₃COO)₂ oder einem Hydrat davon, Ni(CH₃COO)₂ oder einem Hydrat davon, Mn(CH₃COO)₂ oder einem Hydrat davon, und/oder Pt(CH₃COO)₂ oder einem Hydrat davon.

Im Schritt a) werden das Acetatsalz A'Ac und B'Ac bevorzugt getrennt voneinander in Wasser oder organischem Lösungsmittel vollständig gelöst und die Lösungen dann miteinander gemischt.

Das Bindemitttel ist insbesondere ein in dem organischen Lösungsmittel oder Wasser lösliches Polymer, insbesondere Polyvinylacetat, Polyvinylbutyral oder eine Mischung davon.

Das mindestens eine Bindemittel kann dem organischen Lösungsmittel oder Wasser zugegeben werden bevor oder nachdem das jeweilige Salz darin gelöst wurde, oder nachdem die Acetatsalze gemischt wurden.

Nach Schritt a) wird bevorzugt eine Dispersion oder eine Lösung erhalten.

Nach Schritt b) liegt die Gesamtmasse des Bindemittels bevorzugt in einer Konzentration von 1 - 10 Gew.-%, stärker bevorzugt 1 - 3 Gew.-%, noch stärker bevorzugt 0,05 - 3 Gew.-% bezogen auf die Gesamtmenge der Mischung vor.

Um die erfindungsgemäße Verbindung zu generieren, ist dem Fachmann bekannt, dass die Acetatsalze A'Ac und B'Ac im entsprechenden stöchiometrischen Verhältnis eingesetzt werden müssen. Beispielsweise erfolgt die Herstellung von Ba_{0,5}Sr_{0,5}Co_{0,5}Fe_{0,5}O₃ mit einer Mischung der Acetatsalze Ba(CH₃COO)₂:Sr(CH₃COO)₂:Co(CH₃COO)₂:Fe(CH₃COO)₂ im molaren Verhältnis 0,5: 0,5 : 0,5: 0,5.

Im Schritt c) wird die nach Schritt b) erhaltene Mischung homogenisiert. Dies kann vorzugsweise durch Rühren, Erwärmen, Scheren und/oder in einem Ultraschallbad erfolgen.

Nach Schritt c) wird bevorzugt eine Dispersion oder eine Lösung erhalten.

Besonders bevorzugt handelt es sich bei dem erfindungsgemäßen Verfahren um einen Sol-Gel-Prozess in dem durch chemische Reaktion aus der Lösung zunächst ein Sol, d.h. eine kolloidale Dispersion, entsteht aus dem anschließend größere Teilchen hervorgehen. Die Viskosität des nach Schritt c) erhaltenen Homogenisats liegt bevorzugt bei 1 - 200 mPas, bevorzugt 50 - 150 mPas bei 20°C gemessen nach DIN 1342-2:2003-11. Der pH-Wert des nach Schritt c) erhaltenen Homogenisats liegt bevorzugt bei 1-4.

Schritt d) umfasst das thermische Behandeln des nach Schritt c) erhaltenen Homogenisats bei Temperaturen bis zu 1,000°C. Schritt d) kann folgende Unterschritte umfassen:
d1) Behandeln des nach Schritt c) erhaltenen Homogenisats bei 150 - 200 °C für bevorzugt 60-300 s;
d2) Behandeln der nach Schritt d1) erhaltenen Mischung bei 220 - 400 °C für bevorzugt 60-600 s;
d3) Behandeln der nach Schritt d2) erhaltenen Mischung bei 650 - 1000 °C für bevorzugt 0,2 - 6 h, mehr bevorzugt 1-6 h, noch mehr bevorzugt 3-4 h.

Die Heizrate zwischen den Schritten d1) und d2) und/oder zwischen den Schritten d2) und d3) liegt bevorzugt bei 5 - 15 K/min.

Die Abkühlrate zwischen den Schritten d) oder d3) und e) liegt bevorzugt bei 5-60 K/min, stärker bevorzugt bei 5 - 15 K/min.

Beim vorliegenden Verfahren entstehen während des thermischen Behandelns im Schritt d) keine toxischen oder gesundheitsgefährdenden Nebenprodukte. Die Acetatsalze reagieren bei diesem Schritt zu den gewünschten Oxiden, während sich als Nebenprodukte unbedenkliches CO₂ und Wasser bilden. Bei Verwendung anderer Salze, wie z.B. Nitraten, werden dagegen giftige Gase, wie z.B. nitrose Gase, freigesetzt, die aufwendig abgeführt werden müssen.

Ein weiterer Aspekt der vorliegenden Erfindung betrifft ferner eine Zusammensetzung umfassend mindestens ein Salz A'Ac (wie oben beschrieben), mindestens ein Salz B'Ac (wie oben beschrieben), mindestens ein (organisches) Lösungsmittel (wie oben beschrieben) und mindestens ein Bindemittel (wie oben beschrieben).

Bevorzugt wird nach Schritt d3) bzw. nach Schritt d) ein Feststoff erhalten. Bevorzugt wird während des Schritts d) das Lösungsmittel zumindest teilweise, bevorzugt vollständig entfernt.

Ein weiterer Aspekt der vorliegenden Erfindung ist eine Verbindung erhältlich nach dem erfindungsgemäßen Verfahren.

Die erfindungsgemäße Verbindung kann als Elektrodenmaterial verwendet werden.

In einem weiteren Aspekt betrifft die vorliegende Erfindung eine Elektrode, vorzugweise eine Anode, die ein metallisches Substrat, Kohlenstoffvlies und/oder Kohlenstoffpapier und eine erfindungsgemäße Verbindung umfasst.

Das metallische Substrat liegt bevorzugt in Form einer Folie, Platte, eines Streckmetalls oder eines Metallschaums vor.

Das metallische Substrat, Kohlenstoffvlies und/oder Kohlenstoffpapier ist bevorzugt 10 µm bis 2 mm, stärker bevorzugt 100 µm bis 800 µm, noch stärker bevorzugt 200 µm bis 5 mm dick.

Bevorzugt ist das metallische Substrat ausgewählt aus der Gruppe bestehend aus Nickel, Eisen, Kupfer und beliebigen Legierungen davon, besonders bevorzugt Nickel.

Bevorzugt ist das metallische Substrat mit der erfindungsgemäßen Verbindung beschichtet. Die Schichtdicke der Verbindung auf dem metallischen Substrat ist bevorzugt 20 nm bis 10 µm, stärker bevorzugt 20 - 200 nm.

Ein weiterer Aspekt der Erfindung ist auf das Verfahren zur Herstellung der erfindungsgemäßen Elektrode gerichtet. Das Verfahren umfasst die folgenden Schritte
α) Mischen von mindestens einem Acetatsalz A'Ac und mindestens einem Acetatsalz B'Ac mit mindestens einem (organischen) Lösungsmittel, bevorzugt Essigsäure, Formamid, Wasser, Isopropanol und/oder Ethanol;
β) Zugeben mindestens eines Bindemittels, bevorzugt Polyvinylacetat, Polyvinylbutyral, oder einer Mischung davon;
γ) Homogenisieren der nach Schritt β) erhaltenen Mischung;
δ) Auftragen des nach Schritt γ) erhaltenen Homogenisats auf ein metallisches Substrat;
ε) thermisches Behandeln des nach Schritt δ) erhaltenen Substrats;
ϕ) Abkühlen.

Die Schritte α)- γ) entsprechen den Schritten a)-c) des Verfahrens zur Herstellung der erfindungsgemäßen Verbindung. Im Schritt δ) wird das nach Schritt γ) erhaltene Homogenisat auf ein metallisches Substrat aufgebracht. Das metallische Substrat ist wie oben beschrieben. Das Aufbringen erfolgt durch bekannte Verfahren, z.B. Tauchen, Streichen, Rakeln oder Sprühen

Bevorzugt wird das Homogenisat in Schritt δ) in einer Menge von 0,2 - 4 mg/cm², stärker bevorzugt 0,8-2 mg/cm² auf das Substrat aufgetragen.

Schritt ε) entspricht bevorzugt dem Schritt d) des oben beschriebenen Verfahrens zur Herstellung der erfindungsgemäßen Verbindung. Schritt ε) umfasst bevorzugt folgende Unterschritte:
ε1) Behandeln des nach Schritt δ) erhaltenen Substrats bei 150 - 200 °C bevorzugt für 60 - 300 s;
ε2) Behandeln des nach Schritt ε1) erhaltenen Substrats bei 220 - 400 °C für bevorzugt 60 - 600 s; und
ε3) Behandeln des nach Schritt ε2) erhaltenen Substrats bei 650 - 1000 °C für bevorzugt 1 - 6 h.

Bevorzugt ist die Abkühlrate zwischen den Schritten ε) oder ε3) und ϕ) 5-60 K/min.

Nach Schritt ε) oder ε3) ist das (organische) Lösungsmittel zumindest teilweise, bevorzugt vollständig, entfernt.

In einem weiteren Aspekt ist die Erfindung auf eine Elektrode gerichtet, die durch das erfindungsgemäße Verfahren erhältlich ist.

Die erfindungsgemäße Elektrode kann in einer elektrochemischen Zelle verwendet werden. Die elektrochemische Zelle der vorliegenden Erfindung umfasst eine erfindungsgemäße Elektrode, bevorzugt eine erfindungsgemäße Anode, eine Kathode, einen Elektrolyten und ggf. eine Membran.

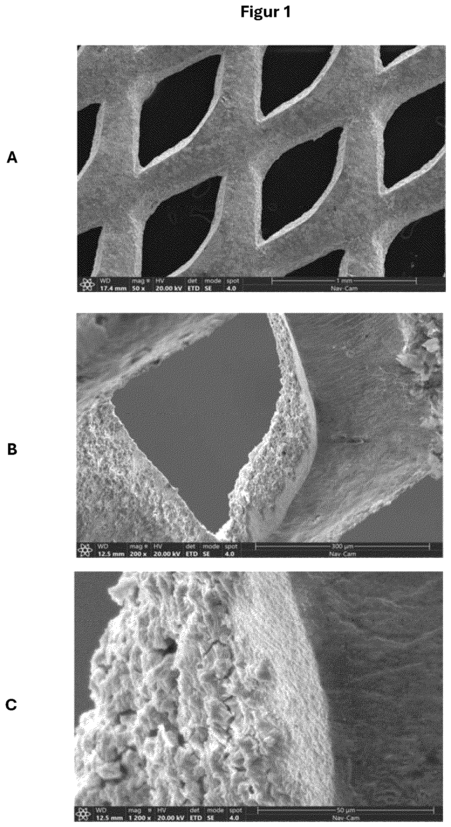

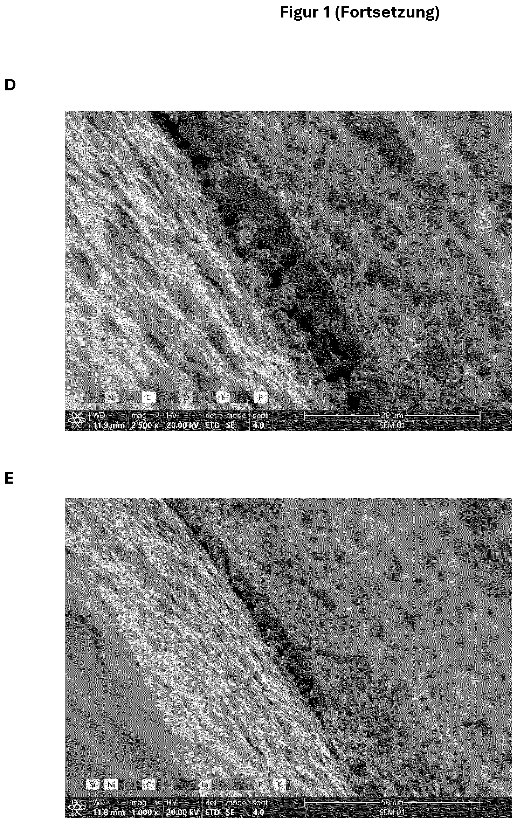

**Figur 1** zeigt REM-Aufnahmen in verschiedenen Vergrößerungen (A:1mm; B: 300µm; C:50 µm; D: Color-SEM via EDX, 20 µm; E: Color-SEM via EDX 20, 50 µm) eines Nickelsubstrats (Lochblech), das mit der erfindungsgemäßen Verbindung La_{0,6}Sr_{0,4}Co_{0,5}Fe_{0,5}O₃ beschichtet ist.

Die vorliegende Erfindung wird durch folgendes Beispiel illustriert, ist aber nicht darauf beschränkt.

### Beispiel La_{0,6}Sr_{0,4}Co_{0,5}Fe_{0,5}O₃

1. Metallacetate gemäß Stöchiometrie abwiegen

| **Chemical** | **Molmasse (g/mol)** | **Stoffmenge (mmol)** | **Einwaage (mg)** |
|---|---|---|---|
| Lanthan(III)acetat hydrat **La(CH₃COO)₃ · 1,5 H₂O** | 343,06 | 0,60000 | 205,8360 |
| Strontium(II)acetat **Sr(CH₃COO)₂** | 205,71 | 0,40000 | 82,2840 |
| Cobalt(II)acetat tetrahydrat **Co(CH₃COO)₂ · 4 H₂O** | 248,86 | 0,50000 | 124,4300 |
| Eisen(II)acetat **Fe(CH₃COO)₂** | 173,93 | 0,50000 | 86,9650 |

2. Auflösen in 7 ml Essigsäure (25 %) bei 80°C
3. Ultraschallbad für 5 min
4. Zugabe von 400 µl einer gesättigten PVA-Lösung aus 5g PVA und 25 ml Essigsäure (25 %) bei 80 °C
5. Ultraschallbad für 5 min
6. Zugabe von 0,4 ml Formamid
7. Rühren für 30 min bei 80 °C

### Beschichtung/ Wärmebehandlung:

8. Dip-/Spray Coating des Substrats
9. Trocknen auf der Heizplatte bei 180°C, 3 min
10.Aufheizen auf 360°C mit 10 K/min, 3 min Haltezeit
11.Aufheizen auf 700°C mit 10 K/min, 3 h Haltezeit
12.Abkühlen auf Raumtemperatur mit 10 K/min

Die vorliegende Erfindung betrifft die folgenden Punkte:
1. Verbindung der Formel ABO₃, AB₂O₄ oder A₂B₂O₆,
   wobei A ausgewählt ist aus Barium (Ba), Strontium (Sr), Lanthan (La), Praseodym (Pr), und/oder Calcium (Ca), bevorzugt Lanthan (La), Barium (Ba) und/oder Strontium (Sr);
   B ausgewählt ist aus Eisen (Fe), Cobalt (Co), Nickel (Ni), Mangan (Mn), Platin (Pt), Iridium (Ir), Ruthenium (Ru), Palladium (Pd) und/oder Kupfer (Cu), bevorzugt Eisen (Fe), Cobalt (Co) und/oder Nickel (Ni),
   wobei die Verbindung in einem Pulverröntgendiffraktogramm (Cu-Kα-Strahlung) mindestens ein charakteristisches Signal 2θ±1° bei 24,4°, 32,7°, 33,0°, 32,7°, 39,7, 41,2°, 46,1°, 47,2°, 57,9° und/oder 69,0° aufweist.
2. Verbindung nach Punkt 1, wobei A
   - La und Sr; oder
   - Ba und Sr umfasst; und/oder
      B
   - Fe und Co; oder
   - Fe und Ni
   umfasst.
3. Verbindung nach Punkt 2, wobei A
   - 40 - 70 mol-% La und 30 - 60 mol-% Sr jeweils bezogen auf A; oder
   - 40 - 70 mol-% Ba und 30 - 60 mol-% Sr jeweils bezogen auf A umfasst; und/oder
      B
   - 40 - 70 mol-% Fe und 30 - 60 mol-% Co jeweils bezogen auf B;
      oder
   - 40 - 70 mol-% Fe und 30 - 60 mol-% Ni jeweils bezogen auf B umfasst.
4. Verbindung nach einem der Punkte 1-3, wobei die Verbindung in einer Perowskit-Struktur oder einer Spinell-Struktur vorliegt.
5. Verbindung nach einem der Punkte 1-4, wobei die Verbindung Ba_{0,5}Sr_{0,5}Co_{0,5}Fe_{0,5}O₃, La_{0,6}Sr_{0,4}CoO₃, La_{0,6}Sr_{0,4}FeO₃, La_{0,6}Sr_{0,4}NiO₃, La_{0,6}Sr_{0,4}Ni_{0,5}Fe_{0,5}O₃, La_{0,6}Sr_{0,4}Co_{0,5}Fe_{0,5}O₃, Ba_{0,6}Sr_{0,4}Ni_{0,5}Fe_{0,5}O₃ oder Ba_{0,6}Sr_{0,4}Co_{0,5}Fe_{0,5}O₃ ist.
6. Verbindung nach einem der Punkte 1-5, wobei die Verbindung einen elektrischen Schichtwiderstand von 0,05 - 2 Ω/cm², gemessen gemäß DIN EN ISO 16773-1 an beschichteten und unbeschichteten metallischen Proben, aufweist.
7. Verfahren zur Herstellung einer Verbindung nach einem der Punkte 1-6, umfassend die Schritte:
   a) Mischen von mindestens einem Acetatsalz A'Ac und mindestens einem Acetatsalz B'Ac mit mindestens einem (organischen) Lösungsmittel, bevorzugt Essigsäure, Formamid, Wasser, Ethanol, Isopropanol, oder einer Mischung davon;
   b) Zugeben mindestens eines Bindemittels, bevorzugt Polyvinylacetat, Polyvinylbutyral oder einer Mischung davon;
   c) Homogenisieren der nach Schritt b) erhaltenen Mischung;
   d) Thermisches Behandeln des nach Schritt c) erhaltenen Homogenisats bei Temperaturen bis zu 1000 °C;
   e) Abkühlen der nach Schritt d) erhaltenen Substanz auf Raumtemperatur.
8. Verfahren nach Punkt 7, wobei das molare Verhältnis von A'Ac:B'Ac 0,5-1,5:0,5-3 in Schritt a) ist.
9. Verfahren nach Punkt 7 oder 8, wobei die Mischung nach Schritt a) eine Lösung oder Dispersion ist.
10. Verfahren nach einem der Punkte 7-9, wobei A' ausgewählt ist aus der Gruppe bestehend aus Ba(II), Sr(II), La(III), Pr(III), und Ca(II), bevorzugt Ba(II), La(III) und Sr(II), und B' ausgewählt ist aus der Gruppe bestehend aus Fe(II, III), Co(II, III), Ni(II, III), Mn(II, III), Pt(II, III), Ir(II, III), Ru(II, III), Pd(II, III) und Cu (I, II), bevorzugt Fe(II, III), Co(II, III) und Ni (II, III).
11. Verfahren nach einem der Punkte 7-10, wobei A'Ac ausgewählt ist aus der Gruppe bestehend aus La(CH₃COO)₃ oder einem Hydrat davon, Sr(CH₃COO)₂ oder einem Hydrat davon, Ba(CH₃COO)₂ oder einem Hydrat davon und/oder Ca(CH₃COO)₂ oder einem Hydrat davon.
12. Verfahren nach einem der Punkte 7-11, wobei B'Ac ausgewählt ist aus der Gruppe bestehend aus Co(CH₃COO)₂ oder einem Hydrat davon, Fe(CH₃COO)₂ oder einem Hydrat davon, Ni(CH₃COO)₂ oder einem Hydrat davon, Mn(CH₃COO)₂ oder einem Hydrat davon und/oder Pt(CH₃COO)₂ oder einem Hydrat davon.
13. Verfahren nach einem der Punkte 7-12, wobei das Bindemittel Polyvinylacetat, Polyvinylbutyral oder eine Mischung davon ist.
14. Verfahren nach einem der Punkte 7-13, wobei das Bindemittel nach Schritt b) in einer Konzentration von 1 - 10 Gew.-%, bevorzugt 1 - 3 Gew.-%, mehr bevorzugt 0,05 - 3 Gew.-% bezogen auf die Gesamtmenge vorliegt.
15. Verfahren nach einem der Punkte 7-14, wobei Homogenisieren in Schritt c) durch Ultraschall, Scherung, Wärmezufuhr und/oder Rühren erfolgt.
16. Verfahren nach einem der Punkte 7-15, wobei nach Schritt c) eine Dispersion oder Lösung vorliegt.
17. Verfahren nach einem der Punkte 7-16, wobei die Viskosität des nach Schritt c) erhaltenen Homogenisats bei 1-200 mPas bei 20°C liegt, gemessen nach DIN 1342-2:2003-11: Viskosität für Newton'sche Flüssigkeiten
18. Verfahren nach einem der Punkte 7-17, wobei der pH-Wert des Homogenisats bei 1-4 liegt.
19. Verfahren nach einem der Punkte 7-18, wobei Schritt d) folgende Schritte umfasst:
   d1) Behandeln des nach Schritt c) erhaltenen Homogenisats bei 150 - 200 °C für bevorzugt 60 - 300 s;
   d2) Behandeln der nach Schritt d1) erhaltenen Mischung bei 220 - 400 °C für bevorzugt 60 - 600 s; und
   d3) Behandeln der nach Schritt d2) erhaltenen Mischung bei 650 - 1000 °C für bevorzugt 0,2 - 6 h, mehr bevorzugt 1 - 6 h, noch mehr bevorzugt 3 - 4 h.
20. Verfahren nach einem der Punkte 7-19, wobei die Heizrate zwischen den Schritten d1) und d2) und/oder zwischen den Schritten d2) und d3) 5 - 15 K/min ist.
21. Verfahren nach einem der Punkte 7-20, wobei die Abkühlrate zwischen den Schritten d) oder d3) und e) 5 - 60 K/min, bevorzugt 5 - 15 K/min, ist.
22. Zusammensetzung, umfassend mindestens ein Salz A'Ac, mindestens ein Salz B'Ac, mindestens ein organisches Lösemittel und mindestens ein Bindemittel.
23. Verwendung der Verbindung nach einem der Punkte 1-6 als Elektrodenmaterial.
24. Elektrode, vorzugsweise Anode, umfassend ein metallisches Substrat, Kohlenstoffvlies und/oder Kohlenstoffpapier und eine Verbindung nach einem der Punkte 1-6.
25. Elektrode nach Punkt 24, wobei das metallische Substrat eine Folie, Platte, Streckmetall oder Metallschaum ist, bevorzugt mit einer Dicke von 10 µm - 2 mm, bevorzugt 100 µm - 800 µm, mehr bevorzugt 200 µm - 5mm.
26. Elektrode nach Punkt 24 oder 25, wobei das metallische Substrat ausgewählt ist aus der Gruppe bestehend aus Nickel, Eisen, Kupfer und beliebigen Legierungen davon, bevorzugt Nickel.
27. Elektrode nach einem der Punkte 24-26, wobei das metallische Substrat mit der Verbindung nach einem der Punkte 1-6 beschichtet ist.
28. Elektrode nach einem der Punkte 24-27, wobei die Beschichtung eine Dicke von 20 nm - 10 µm, bevorzugt 20 - 200 nm aufweist.
29. Verfahren zur Herstellung einer Elektrode nach einem der Punkte 24-28 umfassend die Schritte:
   α) Mischen von mindestens einem Acetatsalz A'Ac und mindestens einem Acetatsalz B'Ac mit mindestens einem (organischen) Lösungsmittel,
   bevorzugt Essigsäure, Formamid, Wasser, Isopropanol und/oder Ethanol;
   β) Zugeben eines Bindemittels, bevorzugt Polyvinylacetat, Polyvinylbutyral oder einer Mischung davon;
   γ) Homogenisieren der nach Schritt β) erhaltenen Mischung;
   δ) Auftragen des nach Schritt γ) erhaltenen Homogenisats auf ein metallisches Substrat;
   ε) thermisches Behandeln des nach Schritt δ) erhaltenen Substrats;
   ϕ) Abkühlen.
30. Verfahren nach Punkt 29, wobei Homogenisieren in Schritt γ) durch Ultraschall, Scherung, Wärmezufuhr oder Rühren erfolgt.
31. Verfahren nach Punkt 29 oder 30, wobei nach Schritt γ) eine Dispersion oder Lösung vorliegt.
32. Verfahren nach einem der Punkte 29-31, wobei in Schritt δ) das Homogenisat in einer Menge von 0,2-4 mg/cm², bevorzugt 0,8-2 mg/cm², auf das Substrat aufgetragen wird.
33. Verfahren nach einem der Punkte 29-32, wobei Schritt ε) folgenden Schritte umfasst:
   ε1) Behandeln des nach Schritt δ) erhaltenen Substrats bei 150 - 200 °C für 60 - 300 s;
   ε2) Behandeln des nach Schritt ε1) erhaltenen Substrats bei 220 - 400 °C für bevorzugt 60 - 600 s; und
   ε3) Behandeln des nach Schritt ε2) erhaltenen Substrats bei 650 - 1000 °C für bevorzugt 1 - 6 h.
34. Verfahren nach einem der Punkte 29-33, wobei die Abkühlrate zwischen den Schritten ε) oder ε3) und Φ) 5 - 60 K/min ist.
35. Elektrode erhältlich nach einem Verfahren nach einem der Punkte 29-34.
36. Verwendung der Elektrode nach einem der Punkte 24-28 oder 35 in einer elektrochemischen Zelle.
37. Elektrochemische Zelle umfassend eine Elektrode, bevorzugt Anode nach einem der Punkte 24-28 oder 35, eine Kathode, ein Elektrolyt und optional eine Membran.

## Patentansprüche

1. Verbindung der Formel ABO₃, AB₂O₄ oder A₂B₂O₆,
wobei A ausgewählt ist aus Barium (Ba), Strontium (Sr), Lanthan (La), Praseodym (Pr), und/oder Calcium (Ca), bevorzugt Lanthan (La), Barium (Ba) und/oder Strontium (Sr);
B ausgewählt ist aus Eisen (Fe), Cobalt (Co), Nickel (Ni), Mangan (Mn), Platin (Pt), Iridium (Ir), Ruthenium (Ru), Palladium (Pd) und/oder Kupfer (Cu), bevorzugt Eisen (Fe), Cobalt (Co) und/oder Nickel (Ni), und
wobei die Verbindung in einem Pulverröntgendiffraktogramm (Cu-Ka-Strahlung) mindestens ein charakteristisches Signal 2θ±1° bei 24,4°, 32,7°, 33,0°, 32,7°, 39,7, 41,2°, 46,1°, 47,2°, 57,9° und/oder 69,0° aufweist.

2. Verbindung nach Anspruch 1, wobei A
• La und Sr; oder
• Ba und Sr umfasst; und/oder
B
• Fe und Co; oder
• Fe und Ni
umfasst und/oder wobei A
• 40 - 70 mol-% La und 30 - 60 mol-% Sr jeweils bezogen auf A; oder
• 40 - 70 mol-% Ba und 30 - 60 mol-% Sr jeweils bezogen auf A umfasst; und/oder
B
• 40 - 70 mol-% Fe und 30 - 60 mol-% Co jeweils bezogen auf B; oder
• 40 - 70 mol-% Fe und 30 - 60 mol-% Ni jeweils bezogen auf B umfasst
und/oder wobei
die Verbindung in einer Perowskit-Struktur oder einer Spinell-Struktur vorliegt und die Verbindung insbesondere Ba_{0,5}Sr_{0,5}Co_{0,5}Fe_{0,5}O₃, La_{0,6}Sr_{0,4}CoO₃, La_{0,6}Sr_{0,4}FeO₃, La_{0,6}Sr_{0,4}NiO₃, La_{0,6}Sr_{0,4}Ni_{0,5}Fe_{0,5}O₃, La_{0,6}Sr_{0,4}Co_{0,5}Fe_{0,5}O₃, Ba_{0,6}Sr_{0,4}Ni_{0,5}Fe_{0,5}O₃ oder Ba_{0,6}Sr_{0,4}Co_{0,5}Fe_{0,5}O₃ ist.

3. Verfahren zur Herstellung einer Verbindung nach Anspruch 1 oder 2, umfassend die Schritte:
(a) Mischen von mindestens einem Acetatsalz A'Ac und mindestens einem Acetatsalz B'Ac mit mindestens einem (organischen) Lösungsmittel, bevorzugt Essigsäure, Formamid, Wasser, Ethanol, Isopropanol, oder einer Mischung davon;
(b) Zugeben mindestens eines Bindemittels, bevorzugt Polyvinylacetat, Polyvinylbutyral oder einer Mischung davon;
(c) Homogenisieren der nach Schritt b) erhaltenen Mischung;
(d) Thermisches Behandeln des nach Schritt c) erhaltenen Homogenisats bei Temperaturen bis zu 1000 °C;
(e) Abkühlen der nach Schritt d) erhaltenen Substanz auf Raumtemperatur.

4. Verfahren nach Anspruch 3, wobei A' ausgewählt ist aus der Gruppe bestehend aus Ba(II), Sr(II), La(III), Pr(III), und Ca(II), bevorzugt Ba(II), La(III) und Sr(II), und/oder B' ausgewählt ist aus der Gruppe bestehend aus Fe(II, III), Co(II, III), Ni(II, III), Mn(II, III), Pt(II, III), Ir(II, III), Ru(II, III), Pd(II, III) und Cu (I, II), bevorzugt Fe(II, III), Co(II, III) und Ni (II, III) und/oder wobei
A'Ac ausgewählt ist aus der Gruppe bestehend aus La(CH₃COO)₃ oder einem Hydrat davon, Sr(CH₃COO)₂ oder einem Hydrat davon, Ba(CH₃COO)₂ oder einem Hydrat davon und/oder Ca(CH₃COO)₂ oder einem Hydrat davon und/oder wobei
B'Ac ausgewählt ist aus der Gruppe bestehend aus Co(CH₃COO)₂ oder einem Hydrat davon, Fe(CH₃COO)₂ oder einem Hydrat davon, Ni(CH₃COO)₂ oder einem Hydrat davon, Mn(CH₃COO)₂ oder einem Hydrat davon und/oder Pt(CH₃COO)₂ oder einem Hydrat davon.

5. Verfahren nach einem der Ansprüche 3-4, wobei das Bindemittel Polyvinylacetat, Polyvinylbutyral oder eine Mischung davon ist und bevorzugt nach Schritt b) in einer Konzentration von 1 - 10 Gew.-%, bevorzugt 1 - 3 Gew.-%, mehr bevorzugt 0,05 - 3 Gew.-% bezogen auf die Gesamtmenge vorliegt.

6. Verfahren nach einem der Ansprüche 3-5, wobei Schritt d) folgende Schritte umfasst:
d1) Behandeln des nach Schritt c) erhaltenen Homogenisats bei 150 - 200 °C für bevorzugt 60 - 300 s;
d2) Behandeln der nach Schritt d1) erhaltenen Mischung bei 220 - 400 °C für bevorzugt 60 - 600 s;
d3) Behandeln der nach Schritt d2) erhaltenen Mischung bei 650 - 1000 °C für bevorzugt 0,2 - 6 h, mehr bevorzugt 1 - 6 h, noch mehr bevorzugt 3 - 4 h und/oder wobei
die Heizrate zwischen den Schritten d1) und d2) und/oder zwischen den Schritten d2) und d3) 5 - 15 K/min ist und/oder wobei die Abkühlrate zwischen den Schritten d) oder d3) und e) 5 - 60 K/min,
bevorzugt 5 - 15 K/min, ist.

7. Zusammensetzung, umfassend mindestens ein Salz A'Ac, mindestens ein Salz B'Ac, mindestens ein organisches Lösemittel und mindestens ein Bindemittel.

8. Verwendung der Verbindung nach einem der Ansprüche 1-2 als Elektrodenmaterial.

9. Elektrode, vorzugsweise Anode, umfassend ein metallisches Substrat, Kohlenstoffvlies und/oder Kohlenstoffpapier und eine Verbindung nach einem der Ansprüche 1-2, wobei das metallische Substrat bevorzugt eine Folie, Platte, Streckmetall oder Metallschaum ist und/oder wobei das metallische Substrat, Kohlenstoffvlies und/oder Kohlenstoffpapier bevorzugt eine Dicke von 10 µm - 2 mm, stärker bevorzugt 100 µm - 800 µm, und noch stärker bevorzugt 200 µm - 5mm hat.

10. Elektrode nach Anspruch 9, wobei das metallische Substrat ausgewählt ist aus der Gruppe bestehend aus Nickel, Eisen, Kupfer und beliebigen Legierungen davon, bevorzugt Nickel und/oder
wobei das metallische Substrat mit der Verbindung nach einem der Ansprüche 1-2 beschichtet ist und/oder wobei
die Beschichtung eine Dicke von 20 nm - 10 µm, bevorzugt 20 - 200 nm aufweist.

11. Verfahren zur Herstellung einer Elektrode nach einem der Ansprüche 9-10 umfassend die Schritte:
α) Mischen von mindestens einem Acetatsalz A'Ac und mindestens einem Acetatsalz B'Ac mit mindestens einem (organischen) Lösungsmittel,
bevorzugt Essigsäure, Formamid, Wasser, Isopropanol und/oder Ethanol;
β) Zugeben eines Bindemittels, bevorzugt Polyvinylacetat, Polyvinylbutyral oder einer Mischung davon;
γ) Homogenisieren der nach Schritt β) erhaltenen Mischung, bevorzugt durch Ultraschall, Scherung, Wärmezufuhr oder Rühren;
δ) Auftragen des nach Schritt γ) erhaltenen Homogenisats auf ein metallisches Substrat;
ε) thermisches Behandeln des nach Schritt δ) erhaltenen Substrats;
Φ) Abkühlen.

12. Verfahren nach Anspruch 11, wobei nach Schritt γ) eine Dispersion oder Lösung vorliegt und/oder
wobei in Schritt δ) das Homogenisat in einer Menge von 0,2-4 mg/cm², bevorzugt 0,8-2 mg/cm², auf das Substrat aufgetragen wird und/oder
wobei
Schritt ε) folgende Schritte umfasst:
ε1) Behandeln des nach Schritt δ) erhaltenen Substrats bei 150 - 200 °C für 60 - 300 s;
ε2) Behandeln des nach Schritt ε1) erhaltenen Substrats bei 220 - 400 °C für bevorzugt 60 - 600 s; und
ε3) Behandeln des nach Schritt ε2) erhaltenen Substrats bei 650 - 1000 °C für bevorzugt 1 - 6 h und/oder wobei
die Abkühlrate zwischen den Schritten ε) oder ε3) und Φ) 5 - 60 K/min ist.

13. Elektrode erhältlich nach einem Verfahren nach einem der Ansprüche 11-12.

14. Verwendung der Elektrode nach einem der Ansprüche 9-10 oder 13 in einer elektrochemischen Zelle.

15. Elektrochemische Zelle umfassend eine Elektrode, bevorzugt Anode, nach einem der Ansprüche 9-10 oder 13, eine Kathode, ein Elektrolyt und optional eine Membran.
